# EUROPEAN PATENT APPLICATION

(11) **EP 4 675 700 A1**
(43) Date of publication of application: **07.01.2026**
(21) Application number: 25187310.5
(22) Date of filing: 03.07.2025
(51) Int. Cl.: H01M 4/139, H01M 50/451, H01M 50/454, H01M 50/46, H01M 50/414, H01M 50/431, H01M 50/44

(54) **ELECTRODE-SEPARATOR STRUCTURES AND RECHARGEABLE LITHIUM BATTERIES INCLUDING THE SAME**

(30) Priority: 05.07.2024 KR 20240089125; 02.07.2025 KR 20250088873
(71) Applicant: SAMSUNG SDI CO., LTD., Yongin-si, Gyeonggi-do 17084 (KR)
(72) Inventor: KIM, Hyunwoo, 17084 Yongin-si (KR)
(74) Representative: Maiwald GmbH

(57) **Abstract**

An electrode-separator structure is disclosed. The electrode-separator structure may include an electrode including a current collector; an electrode active material layer on the current collector; and an uncoated region at an end (e.g., at least one end) of the current collector where the electrode active material layer is not coated on the current collector; and a separator composite layer on a surface of the electrode, wherein the separator composite layer may include a fiber region including a polymer fiber and provided on the electrode active material layer; and an inorganic coating region including inorganic particles and provided on the uncoated region. The electrode may have excellent or suitable durability, and the separator on the current collector may not easily be peeled off and may achieve or provide the effect of controlling heat generation, thereby enabling the implementation of a thin film rechargeable lithium battery.

## Description

### BACKGROUND

### 1. Field

One or more embodiments of the present disclosure relate to an electrode-separator structure and a rechargeable lithium battery including the electrode-separator structure.

### 2. Description of the Related Art

Portable information devices, such as cell phones, laptops, smart phones, and/or the like, and/or electric vehicles use rechargeable lithium batteries due to their relatively high energy density and easy portability as a driving power source. Recently, research has been actively conducted to use rechargeable lithium batteries having high energy density as a driving power source for hybrid vehicles and/or electric vehicles as well as a power storage source for energy storage systems (ESSs).

Rechargeable lithium batteries include a positive electrode and a negative electrode that include active materials capable of intercalation/deintercalation of lithium ions, a separator, and an electrolyte solution. The adhesion between the positive electrode and/or the negative electrode and the separator plays an important role in the stability of the rechargeable lithium batteries. However, it is still desired or required to control the heat generation of the positive electrode and/or the negative electrode so that the separator does not peel off easily. That is, research is still needed or desired to control the heat generation of the positive electrode and/or the negative electrode to prevent or protect the separator from peeling off easily.

### SUMMARY

One or more aspects of embodiments of the present disclosure are directed toward an electrode in which the separator does not peel off easily, has excellent or suitable durability, allows easy control of heat generation by each region, and enables implementation of a thin film rechargeable lithium battery, an electrode-separator structure including the electrode, and a rechargeable lithium battery including the electrode-separator structure. By way of examples, one or more aspects of embodiments of the present disclosure are directed toward an electrode with a separator that does not peel off easily, has excellent durability, allows easy control of heat generation by each region, and enables the implementation of a thin film rechargeable lithium battery. This includes an electrode-separator structure and a rechargeable lithium battery incorporating the electrode-separator structure.

Additional aspects of embodiments will be set forth in part in the description which follows and, in part, will be apparent from the description or may be learned by practice of the presented embodiments of the disclosure.

In one or more embodiments of the present disclosure, an electrode-separator structure includes an electrode including a current collector; an electrode active material layer on the current collector; and an uncoated region at an end (e.g., at least one end) of the current collector where an electrode active material layer is not coated on the current collector, and a separator composite layer on the surface of the electrode, wherein the separator composite layer includes a fiber region including a polymer fiber and provided on the electrode active material layer; and an inorganic coating region including inorganic particles and provided on the uncoated region.

In one or more embodiments, a method for manufacturing an electrode-separator structure includes: (a) preparing an electrode including a current collector, an electrode active material layer on the current collector, and an uncoated region on which the electrode active material layer is not coated on the current collector; (b) in an electrospinning equipment, injecting a polymer composition into a supply device of a nozzle section ejected onto the electrode active material layer, and injecting an inorganic particle composition into another supply device of a nozzle section ejected onto the uncoated region; and (c) concurrently (e.g., simultaneously) performing electrospinning by utilizing an electrospinning device, so that the polymer composition is electrospun on the electrode active material layer to form or provide a fiber region including a polymer fiber, and the inorganic particles are electrosprayed on the uncoated region to form or provide an inorganic coating region, thereby forming or providing a separator composite layer in which the fiber region and the inorganic coating region are continuously (e.g., substantially continuously) formed or provided on the electrode surface.

In one or more embodiments, a rechargeable lithium battery including the electrode-separator structure is provided.

The electrode according to one or more embodiments may have excellent or suitable durability, and a separator on a current collector may not be easily peeled off and may achieve or provide the effect of controlling heat generation, thereby enabling the implementation of a thin film rechargeable lithium battery. For example, the electrode according to one or more embodiments may control heat generation.

### BRIEF DESCRIPTION OF THE DRAWINGS

The above and other aspects and features of certain embodiments of the present disclosure will become more apparent from the following description taken in conjunction with the accompanying drawings.

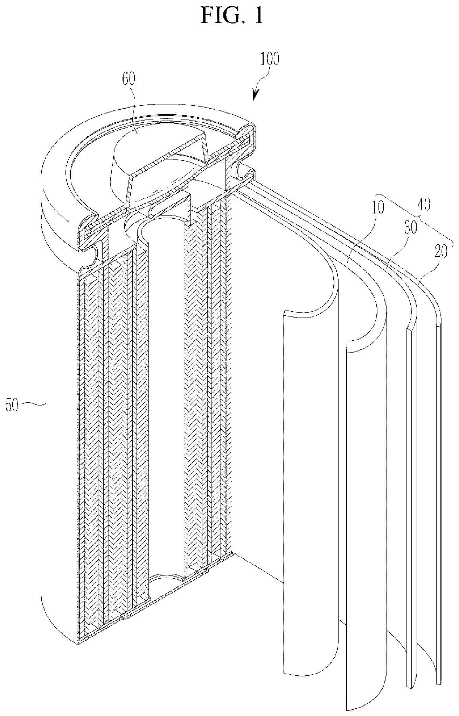

FIGS. 1-4 are cross-sectional views each schematically illustrating a rechargeable lithium battery according to one or more embodiments.

### DETAILED DESCRIPTION

Hereinafter, the subject matter of the present disclosure will be described more fully with reference to the accompanying drawings, in which embodiments of the present disclosure are shown. As those skilled in the art would realize, the described embodiments may be modified in one or more suitable different ways, all without departing from the scope of the present disclosure. The drawings and description are to be regarded as illustrative in nature and not restrictive.

The terminology used herein is for the purpose of describing certain embodiments only and is not intended to be limiting of the present disclosure.

Like reference numerals designate like elements throughout, and duplicative descriptions thereof may not be provided in the specification.

As used herein, the singular forms "a," "an," and "the" are intended to include the plural forms as well, unless the context clearly indicates otherwise. The singular expression includes the plural expression unless the context clearly dictates otherwise.

As used herein, "combination thereof" refers to a mixture, a laminate, a composite, a copolymer, an alloy, a blend, a reaction product, and/or the like of the constituents.

Herein, it should be understood that the terms, such as "includes," "including," "have," or "having," are intended to designate the presence of stated features, numbers, steps (e.g., acts or tasks), elements, and/or a (e.g., any suitable) combination thereof, but it does not preclude the possibility of the presence or addition of one or more other features, numbers, steps (e.g., acts or tasks), elements, and/or a (e.g., any suitable) combination thereof.

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

The utilization of "may" if (e.g., when) describing embodiments of the present disclosure refers to "one or more embodiments of the present disclosure."

As utilized herein, the terms "substantially," "about," or similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" may refer to being within one or more standard deviations, or within ±30%, ±20%, ±10%, or ±5% of the stated value.

In the context of the present application and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, for example, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the drawings, the thickness of layers, films, panels, regions, and/or the like may be exaggerated to effectively illustrate the technical contents.

It will be understood that if (e.g., when) an element, such as a layer, a film, a region, or a substrate, is referred to as being "on" another element, it may be directly on the other element or intervening elements may also be present therebetween. In contrast, if (e.g., when) an element is referred to as being "directly on" another element, there are no intervening elements present therebetween.

In one or more embodiments, the term "layer" herein includes not only a shape formed or provided on the whole surface if (e.g., when) viewed from a plan view, but also a shape formed or provided on a partial surface.

Unless otherwise defined in the present disclosure, a particle diameter may be an average particle diameter. In one or more embodiments, the average particle diameter may refer to the diameter (D₅₀) of particles having a cumulative volume of 50 volume% in the particle size distribution. The average particle diameter may be measured by any suitable method that is generally available to or generally used by those skilled in the art, for example, by a particle size analyzer and/or may also be measured by utilizing a transmission electron microscope (TEM) image and/or a scanning electron microscope (SEM) image. As used herein, if (e.g., when) a definition is not otherwise provided, the average particle diameter refers to a diameter (D₅₀) of particles having a cumulative volume of 50 volume% in the particle size distribution that is obtained by measuring the size (e.g., diameter or major axis length) of about 20 particles at random in a scanning electron microscope (SEM) image. In one or more embodiments, a dynamic light-scattering (DLS) measurement device may be used to perform a data analysis, by which the number of particles is counted for each particle size range, and then from this data, an average particle diameter (D₅₀) value may be obtained through a calculation. Also, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device. In one or more embodiments, if (e.g., when) particles are spherical (e.g., substantially spherical), "diameter" or "size" refers to a particle diameter, and if (e.g., when) the particles are non-spherical (e.g., substantially non-spherical), the "diameter" or "size" refers to a major axis length.

Herein, "or" is not to be construed as an exclusive meaning, for example, "A or B" is construed to include A, B, A+B, and/or the like.

"Metal" is interpreted as a concept including ordinary metals, transition metals, and/or metalloids (semi-metals).

Unless otherwise defined, all terms (including technical and scientific terms) used herein have substantially the same meaning as generally understood by one of ordinary skill in the art to which the present disclosure belongs. It will be further understood that terms, such as those defined in dictionaries that are generally available or generally used, should be interpreted as having a meaning that is consistent with their meaning in the context of the relevant art and will not be interpreted in an idealized or overly formal sense unless expressly so defined herein.

### Electrode

In one or more embodiments, an electrode-separator structure may include an electrode including a current collector; an electrode active material layer on the current collector; and an uncoated region at a terminal or at an end (e.g., at least one terminal or at least one end) of the current collector where an electrode active material layer is not coated on the current collector, and a separator composite layer on the surface of the electrode, wherein the separator composite layer includes a fiber region including a polymer fiber and provided on the electrode active material layer; and an inorganic coating region including inorganic particles and provided on the uncoated region.

### Electrode Active Material Layer

The electrode-separator structure according to one or more embodiments may include an electrode active material layer coated on a portion of a current collector surface.

A thickness of the electrode active material layer may be about 10 µm to about 400 µm, for example, about 10 µm to about 300 µm, about 20 µm to about 200 µm, about 30 µm to about 150 µm, or about 40 µm to about 100 µm.

### Positive Electrode Active Material Layer

If (e.g., when) the electrode according to one or more embodiments is a positive electrode, the active material may be a compound (e.g., a lithiated intercalation compound) capable of intercalating and deintercalating lithium. For example, one or more types (kinds) of composite oxides of lithium and a metal selected from among cobalt, manganese, nickel, and one or more (e.g., any suitable) combinations thereof may be used.

The composite oxide may be a lithium transition metal composite oxide, and, for example, may include a lithium nickel-based oxide, a lithium cobalt-based oxide, a lithium manganese-based oxide, a lithium iron phosphate-based compound, a cobalt-free lithium nickel-manganese-based oxide, and/or a (e.g., any suitable) combination thereof.

As an example, a compound represented by any of (e.g., any one selected from among) the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and/or LiₐFePO₄ (0.90≤a≤1.8).

In the foregoing chemical formulas, A may be nickel (Ni), cobalt (Co), manganese (Mn), and/or a (e.g., any suitable) combination thereof; X may be aluminum (Al), Ni, Co, Mn, chromium (Cr), iron (Fe), magnesium (Mg), strontium (Sr), vanadium (V), a rare earth element, and/or a (e.g., any suitable) combination thereof; D may be oxygen (O), fluorine (F), sulfur (S), phosphorus (P), and/or a (e.g., any suitable) combination thereof; G may be Al, Cr, Mn, Fe, Mg, lanthanum (La), cerium (Ce), Sr, V, and/or a (e.g., any suitable) combination thereof; and L¹ may be Mn, Al, and/or a (e.g., any suitable) combination thereof.

The active material may be, for example, a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, and/or a (e.g., any suitable) combination thereof.

Chemical Formula 11 Liₐ₁₁Niₓ₁₁M¹¹_{y11}M¹²_{z11}O_{2-b11}X_{b11}

In Chemical Formula 11, 0.9≤a11≤1.8, 0.3≤x11≤1, 0≤y11≤0.7, 0≤z11≤0.7, 0.9≤x11+y11+z11≤1.1, and 0≤b11≤0.1, M¹¹ and M¹² may each independently be one or more elements selected from among Al, boron (B), barium (Ba), calcium (Ca), Ce, Co, Cr, copper (Cu), Fe, Mg, Mn, molybdenum (Mo), niobium (Nb), silicon (Si), tin (Sn), Sr, titanium (Ti), V, tungsten (W), and zirconium (Zr), and X may be one or more elements selected from among F, P, and S.

In Chemical Formula 11, 0.6≤x11≤1, 0≤y11≤0.4, and 0≤z11≤0.4, or 0.8≤x11≤1, 0≤y11≤0.2, and 0≤z11≤0.2.

Chemical Formula 12 Liₐ₁₂Coₓ₁₂M¹³_{y12}O_{2-b12}X_{b12}

In Chemical Formula 12, 0.9≤a12≤1.8, 0.7≤x12≤1, 0≤y12≤0.3, 0.9≤x12+y12≤1.1, and 0≤b12≤0.1, M¹³ may be one or more elements selected from among Al, B, Ba, Ca, Ce, Cr, Cu, Fe, Mg, Mn, Mo, Ni, selenium (Se), Si, Sn, Sr, Ti, V, W, Y, zinc (Zn), and Zr, and X may be one or more elements selected from among F, P, and S.

Chemical Formula 13 Liₐ₁₃Feₓ₁₃M¹⁴_{y13}PO_{4-b13}X_{b13}

In Chemical Formula 13, 0.9≤a13≤1.8, 0.6≤x13≤1, 0≤y13≤0.4, and 0≤b13≤0.1, M¹⁴ may be one or more elements selected from among Al, B, Ba, Ca, Ce, Co, Cr, Cu, Mg, Mn, Mo, Ni, Se, Si, Sn, Sr, Ti, V, W, Y, Zn, and Zr, and X may be one or more elements selected from among F, P, and S.

Chemical Formula 14 Liₐ₁₄Niₓ₁₄Mn_{y14}M¹⁵_{z14}O_{2-b14}X_{b14}

In Chemical Formula 14, 0.9≤a14≤1.8, 0.8≤x14<1, 0<y14≤0.2, 0≤z14≤0.2, 0.9≤x14+y14+z14≤1.1, and 0≤b14≤0.1, M¹⁵ may be one or more elements selected from among Al, B, Ba, Ca, Ce, Cr, Fe, Mg, Mo, Nb, Si, Sn, Sr, Ti, V, W, and Zr, and X may be one or more elements selected from among F, P, and S.

As an example, the active material may be a high nickel-based active material having a nickel content (e.g., amount) of greater than or equal to about 80 mol%, greater than or equal to about 85 mol%, greater than or equal to about 90 mol%, greater than or equal to about 91 mol%, greater than or equal to about 94 mol%, or greater than or equal to 99 mol% based on 100 mol% of a metal excluding lithium in the lithium transition metal composite oxide. The high-nickel-based active materials may achieve or provide high capacity (e.g., electrical capacity) and may be applied to high-capacity (e.g., electrical capacity), high-density rechargeable lithium batteries.

If (e.g., when) the electrode according to one or more embodiments is a positive electrode, the active material layer may include the active material and may further include a binder and/or a conductive (e.g., electrically conductive) material (e.g., an electron conductor). Herein, the content (e.g., amount) of the active material may be about 90 wt% to about 98 wt%, for example, about 90 wt% to about 95 wt% based on a total weight (e.g., based on 100 wt%) of the active material layer. The contents (e.g., amounts) of the binder and the conductive (e.g., electrically conductive) material (e.g., an electron conductor) may each be about 1 wt% to about 5 wt% based on a total weight (e.g., based on 100 wt%) of the active material layer.

The binder may act or serve to adhere the active material particles well or suitably to each other and also to adhere the active material well or suitably to the current collector, and examples of the binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but embodiments of the present disclosure are not limited thereto.

The conductive (e.g., electrically conductive) material (e.g., an electron conductor) may be used to provide conductivity (e.g., electrical conductivity) to the electrode, and any suitable material that does not cause a chemical change (e.g., an undesirable chemical change) in the rechargeable lithium battery to be formed and is electronically conductive may be used. Examples of such a conductive (e.g., electrically conductive) material (e.g., an electron conductor) may include a conductive (e.g., electrically conductive) material including a carbon-based material, such as natural graphite, artificial graphite, carbon black, acetylene black, Ketjen black, a carbon fiber, and a carbon nanotube; a metal-based material including copper, nickel, aluminum, silver, and/or the like, and in the form of a metal powder and/or a metal fiber; a conductive (e.g., electrically conductive) polymer, such as polyphenylene and/or a polyphenylene derivative; and/or a (e.g., any suitable) mixture thereof.

### Negative Electrode Active Material Layer

If (e.g., when) the electrode according to one or more embodiments is a negative electrode, the active material may include a material that reversibly intercalates/deintercalates lithium ions, lithium metal, a lithium metal alloy, a material capable of doping/dedoping lithium, and/or transition metal oxide.

The material that reversibly intercalates/deintercalates lithium ions may include, for example, crystalline carbon, amorphous (e.g., non-crystalline) carbon, and/or a (e.g., any suitable) combination thereof as a carbon-based active material. The crystalline carbon may be irregular-shaped (e.g., substantially irregular-shaped), sheet-shaped (e.g., substantially sheet-shaped), flake-shaped (e.g., substantially flake-shaped), sphere-shaped (e.g., substantially sphere-shaped), or fiber-shaped (e.g., substantially fiber-shaped) natural graphite and/or artificial graphite. The amorphous (e.g., non-crystalline) carbon may be a soft carbon, a hard carbon, a mesophase pitch carbonization product, calcined coke, and/or the like.

The lithium metal alloy may include an alloy of lithium and a metal selected from among sodium (Na), potassium (K), rubidium (Rb), cesium (Cs), francium (Fr), beryllium (Be), Mg, Ca, Sr, Si, antimony (Sb), lead (Pb), indium (In), Zn, Ba, radium (Ra), germanium (Ge), Al, and Sn.

The material capable of doping/dedoping lithium may be a Si-based active material and/or a Sn-based active material. The Si-based active material may include silicon, a silicon-carbon composite, SiOₓ (0 < x ≤ 2; e.g., SiO₂), a Si-Q alloy (wherein Q may be an element selected from among an alkali metal, an alkaline-earth metal, a Group 13 element, a Group 14 element (excluding Si), a Group 15 element, a Group 16 element, a transition metal, a rare earth element, and a (e.g., any suitable) combination thereof, for example Mg, Ca, Sr, Ba, Ra, scandium (Sc), yttrium (Y), Ti, Zr, hafnium (Hf), rutherfordium (Rf), V, Nb, tantalum (Ta), dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, gallium (Ga), Sn, In, thallium (Tl), Ge, P, arsenic (As), Sb, bismuth (Bi), S, Se, tellurium (Te), polonium (Po), and/or a (e.g., any suitable) combination thereof), and/or a (e.g., any suitable) combination thereof. The Sn-based active material may be Sn, SnOₓ (wherein 0 < x ≤ 2; e.g., SnO₂), a Sn alloy, and/or a (e.g., any suitable) combination thereof.

The silicon-carbon composite may be a composite of silicon and amorphous (e.g., non-crystalline) carbon. The average particle diameter (D₅₀) of the silicon-carbon composite particles may be, for example, about 0.5 µm to about 20 µm. According to one or more embodiments, the silicon-carbon composite may be in the form of silicon particles and amorphous (e.g., non-crystalline) carbon coated on the surface of the silicon particles. For example, it may include a secondary particle (core) in which silicon primary particles are assembled and an amorphous (e.g., non-crystalline) carbon coating layer (shell) on the surface of the secondary particle. The amorphous (e.g., non-crystalline) carbon may also be between the silicon primary particles, for example, the silicon primary particles may be coated with amorphous (e.g., non-crystalline) carbon. The secondary particles may exist dispersed in an amorphous (e.g., non-crystalline) carbon matrix.

The silicon-carbon composite may further include crystalline carbon. For example, the silicon-carbon composite may include a core including crystalline carbon and silicon particles and an amorphous (e.g., non-crystalline) carbon coating layer on the surface of the core. The crystalline carbon may be artificial graphite, natural graphite, and/or a (e.g., any suitable) combination thereof. The amorphous (e.g., non-crystalline) carbon may include soft carbon, hard carbon, a mesophase pitch carbonized product, and/or calcined coke.

If (e.g., when) the silicon-carbon composite includes silicon and amorphous (e.g., non-crystalline) carbon, a content (e.g., amount) of silicon may be about 10 wt% to about 50 wt% and a content (e.g., amount) of amorphous (e.g., non-crystalline) carbon may be about 50 wt% to about 90 wt% based on 100 wt% of the silicon-carbon composite. In one or more embodiments, if (e.g., when) the composite includes silicon, amorphous (e.g., non-crystalline) carbon, and crystalline carbon, a content (e.g., amount) of silicon may be about 10 wt% to about 50 wt%, a content (e.g., amount) of crystalline carbon may be about 10 wt% to about 70 wt%, and a content (e.g., amount) of amorphous (e.g., non-crystalline) carbon may be about 20 wt% to about 40 wt% based on 100 wt% of the silicon-carbon composite.

In one or more embodiments, a thickness of the amorphous (e.g., non-crystalline) carbon coating layer may be about 5 nm to about 100 nm. An average particle diameter (D₅₀) of the silicon particles (primary particles) may be about 10 nm to about 1 µm or about 10 nm to about 200 nm. The silicon particles may exist as silicon alone, in the form of a silicon alloy, and/or in an oxidized form. The oxidized form of silicon may be represented by SiOₓ (wherein 0<x≤2, e.g., SiO₂). In one or more embodiments, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) refers to a particle where an accumulated volume is about 50 volume% in a particle distribution.

The Si-based active material and/or the Sn-based active material may be mixed with the carbon-based active material. If (e.g., when) the Si-based active material or the Sn-based active material and the carbon-based active material are mixed and used, the mixing ratio may be a weight ratio of about 1:99 to about 90:10.

If (e.g., when) the electrode according to one or more embodiments is a negative electrode, the active material layer may include the active material and may further include a binder and/or a conductive (e.g., electrically conductive) material (e.g., an electron conductor).

The binder may act or serve to well or suitably adhere the active material particles to each other and also to adhere the active material to the current collector. The binder may be a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of imparting or increasing viscosity may be further included. As the cellulose-based compound, one or more of carboxymethyl cellulose, hydroxypropyl methylcellulose, methyl cellulose, and alkali metal salts thereof may be mixed and used. The alkali metal may be Na, K, and/or Li.

The dry binder may be a polymer material capable of becoming fiber (e.g., processable to become fiber), and may be, for example, polytetrafluoroethylene, polyvinylidene fluoride, a polyvinylidene fluoride-hexafluoropropylene copolymer, polyethylene oxide, and/or a (e.g., any suitable) combination thereof.

The conductive (e.g., electrically conductive) material (e.g., an electron conductor) may be included to provide electrode conductivity (e.g., electrical conductivity) and any suitable electrically conductive material may be used as a conductive material unless it causes a chemical change (e.g., an undesirable chemical change). Examples of the conductive (e.g., electrically conductive) material (e.g., an electron conductor) may include a carbon-based material, such as natural graphite, artificial graphite, carbon black, acetylene black, Ketjen black, a carbon fiber, a carbon nanofiber, a carbon nanotube, and/or the like; a metal-based material of a metal powder and/or a metal fiber including copper, nickel, aluminum, silver, and/or the like; a conductive (e.g., electrically conductive) polymer, such as polyphenylene and/or a polyphenylene derivative; and/or a (e.g., any suitable) mixture thereof.

### Separator Composite Layer

In an electrode-separator structure according to one or more embodiments, an electrode active material layer may be coated to a portion of a surface of a current collector, an uncoated region may be included at an end (e.g., at least one end) of the current collector where the electrode active material layer is not coated, and a separator composite layer may be provided on the surface of the electrode. In one or more embodiments, the separator composite layer may include a fiber region on the electrode active material layer and an inorganic coating region on the uncoated region, and the uncoated region may be at one end or both (e.g., opposite) ends of the current collector.

The separator composite layer may be on each surface of the current collector (e.g., double-sided coating) or may be on only one surface of the current collector (e.g., single-sided coating). In contrast to single-sided coating, double-sided coating may dissipate heat generated both (e.g., simultaneously) inside and outside of a rechargeable lithium battery, effectively or suitably suppressing or reducing overheating and ignition of the rechargeable lithium battery.

The polymer fiber included in the fiber region may include, for example, polyethylene (PE), polypropylene (PP), polymethyl methacrylate (PMMA), polyvinylidene fluoride (PVdF), polyvinyl pyrrolidone (PVP), polysulfone (PSF), polystyrene (PS), polyvinyl chloride (PVC), polyethylene terephthalate (PET), polyimide (PI), polyetherimide (PEI), polyvinyl alcohol (PVA), polyacrylonitrile (PAN), polytetrafluoroethylene (PTFE), polyamideimide (PAI), polyether ether ketone (PEEK), polyether sulfone (PES), carboxymethyl cellulose (CMC), polyphenylene sulfide (PPS), and/or a (e.g., any suitable) combination thereof.

In one or more embodiments, if (e.g., when) the electrode is a positive electrode, the polymer fiber included in the fiber region may include, for example, polyimide (PI), polypropylene (PP), polyetherimide (PEI), polyacrylonitrile (PAN), polyvinylidene fluoride (PVdF), polyvinyl pyrrolidone (PVP), and/or a (e.g., any suitable) combination thereof.

If (e.g., when) the electrode is a negative electrode, the polymer fiber included in the fiber region may include, for example, polyimide (PI), polypropylene (PP), polyetherimide (PEI), polyacrylonitrile (PAN), polyvinyl alcohol (PVA), carboxymethyl cellulose (CMC), and/or a (e.g., any suitable) combination thereof. The polymer fiber may improve or enhance the adhesion between the fiber region and the current collector, and at the same time, may act or serve as a structural support that maintains the fiber region without melting even at relatively high temperatures.

The polymer fiber included in the fiber region may have a diameter of about 20 nm to about 10 µm, for example, about 20 nm to about 500 nm, about 100 nm to about 500 nm, or about 200 nm to about 300 nm. In one or more embodiments, the polymer fiber included in the fiber region may have a length of about 0.5 µm to about 50 cm, for example, about 0.5 µm to about 800 µm, about 10 µm to about 800 µm, or about 10 µm to about 50 µm. If (e.g., when) the polymer fiber has a diameter and a length within each of the ranges, the polymer fiber may act or serve as a structure support that maintains the fiber region.

The width of the fiber region, for example, the width of the upper surface of the electrode active material layer, which is covered with the separator composite layer, may be about 40% to about 100%, for example, about 50% to about 100%, about 60% to about 100%, about 70% to about 100%, about 80% to about 100%, or about 90% to about 100% based on the total width of the electrode active material layer. If (e.g., when) the fiber region has a width within the ranges, the polymer fiber may act or serve as a structure support that maintains the fiber region.

The inorganic coating region may be on the uncoated region at the end of the current collector where the electrode active material layer is not formed or provided or both (e.g., simultaneously) the uncoated region at the end of the current collector where the electrode active material layer is not formed or provided and a portion of the electrode active material layer. For example, the inorganic coating region may be located or provided on the uncoated regions at the ends of the current collector where the electrode active material layers are not formed or provided, or on both the uncoated regions at the ends of the current collector where the electrode active material layers are not formed or provided and a portion of the electrode active material layer. If (e.g., when) the inorganic coating region is on the uncoated region at the end of the current collector where the electrode active material layer is not coated, the inorganic region may have a width of about 20 mm to about 100 mm, for example, about 25 mm to about 95 mm, about 30 mm to about 90 mm, about 35 mm to about 85 mm, or about 40 mm to about 80 mm. In one or more embodiments, if (e.g., when) the inorganic coating region is on the uncoated region at the end of the current collector where the electrode active material layer is not formed or provided and the portion of the electrode active material layer, the inorganic region may have a width of about 20 mm to about 100 mm, for example, about 25 mm to about 95 mm, about 30 mm to about 90 mm, about 35 mm to about 85 mm, or about 40 mm to about 80 mm. If (e.g., when) the inorganic coating region has a width within the ranges, the uncoated current collector may be prevented from an exposure problem (or a degree or occurrence of an exposure problem may be reduced) and, concurrently (e.g., simultaneously), another problem of raising edges of the electrode plate (or a degree or occurrence of another problem of raising edges or the electrode plate may be reduced) and thereby, deteriorating charge and discharge efficiency if (e.g., when) lithium ions are intercalated/deintercalated during the charge and discharge. In other words, the inorganic coating region may be located or provided on the uncoated region at the end of the current collector where the electrode active material layer is not formed or provided, or on both the uncoated region and a portion of the electrode active material layer. The inorganic region may have a width of about 20 mm to about 100 mm. This configuration helps prevent exposure problems and reduces issues with the edges of the electrode plate, thereby improving or enhancing charge and discharge efficiency during lithium ion intercalation/deintercalation.

The inorganic particles may include insulating (e.g., electrically insulating) materials, for example, aluminum oxide (Al₂O₃), silicon dioxide (SiO₂), magnesium oxide (MgO), titanium dioxide (TiO₂), hafnium oxide (HfO₂), tin oxide (SnO), cerium (IV) oxide (CeO₂), nickel oxide (NiO), zinc oxide (ZnO), calcium oxide (CaO), zirconium oxide (ZrO₂), yttrium oxide (Y₂O₃), silicon carbide (SiC), hexagonal boron nitride (HBN), boron nitride nanotube (BNNT), aerogel, and/or a (e.g., any suitable) combination thereof.

The inorganic particles may have an average particle diameter (D₅₀) of about 50 nm to about 5 µm, for example, about 50 nm to about 1 µm, about 150 nm to about 1 µm, or about 500 nm to about 1 µm. If (e.g., when) the inorganic particles have an average particle diameter within the ranges, there are advantages or benefits of achieving or providing excellent or suitable adhesion to the current collector even with a small amount of a binder and reducing a lithium bypass, which may lead to a decrease in lithium precipitation and an increase in charge/discharge capacity.

The inorganic particles may have a specific surface area of about 0.1 m²/g to about 50 m²/g, for example, about 1.0 m²/g to about 40 m²/g, about 2.0 m²/g to about 30 m²/g, about 3.0 m²/g to about 20 m²/g, about 4.0 m²/g to about 10 m²/g, or about 5.0 m²/g to about 8.0 m²/g. If (e.g., when) the inorganic particles have a specific surface area within the ranges, excellent or suitable adhesion with the current collector may be secured or provided even with a small amount of a binder.

The inorganic particles may be included in an amount of about 0.1 wt% to about 2.0 wt% based on 100 wt% of the total inorganic coating region, for example, about 0.2 wt% to about 1.5 wt% or about 0.5 wt% to about 1.0 wt%. If (e.g., when) the inorganic particles are included within the ranges, the inorganic coating region may have excellent or suitable insulating (e.g., electrically insulating) characteristics and, concurrently (e.g., simultaneously), exhibit or provide appropriate or suitable adhesion and also, dissipate heat generated from inside and outside of the rechargeable lithium battery, thereby effectively suppressing or reducing exothermicity and ignition of the rechargeable lithium battery.

The fiber region and the inorganic coating region may be continuously (e.g., substantially continuously) present on substantially the same plane. For example, a distance from the current collector to the surface of the fiber region and a distance from the current collector to the surface of the inorganic coating region may have a difference of less than or equal to about 1 µm, for example, about 0 µm to about 1.0 µm, about 0.1 µm to about 1.0 µm, about 0.2 µm to about 1.0 µm, or about 0.5 µm to about 1.0 µm.

The separator composite layer and the electrode active material layer may independently have each end portion vertical (e.g., substantially vertical) to the current collector but an inclined end portion, whose surface is inclined from the inner surface adjacent to the current collector toward the outer surface.

The separator composite layer may have a thickness of about 1 µm to about 30 µm, for example, about 2 µm to about 20 µm, about 2 µm to about 10 µm, or about 2 µm to about 5 µm. Herein, the fiber region of the separator composite layer may have a thickness of about 1 µm to about 30 µm, for example, about 2 µm to about 20 µm, about 2 µm to about 10 µm, or about 2 µm to about 5 µm. In one or more embodiments, the inorganic coating region of the separator composite layer may have a thickness of about 1 µm to about 30 µm, for example, about 2 µm to about 20 µm, about 2 µm to about 10 µm, or about 2 µm to about 5 µm. If (e.g., when) these ranges are satisfied, the separator composite layer may not only minimize or reduce a decrease in energy density during operation of the rechargeable lithium battery but also sufficiently or suitably contribute to securing or providing safety and reliability.

The separator composite layer may further include a binder, and the binder may play a role of bonding materials in the separator composite layer and adhering the separator composite layer to the current collector.

The binder may include a non-water-soluble (or non-aqueous or water-insoluble) binder, a water-soluble (or aqueous) binder, and/or a (e.g., any suitable) combination thereof.

The non-water-soluble (or non-aqueous or water-insoluble) binder may include polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, and/or a (e.g., any suitable) combination thereof.

The water-soluble binder may include a rubber-based binder and/or a polymer resin binder. The rubber-based binder may be selected from among a styrene-butadiene rubber (SBR), an acrylated styrene-butadiene rubber, an acrylonitrile-butadiene rubber (ABR), an acrylic rubber, a butyl rubber, a fluorine rubber, and/or a (e.g., any suitable) combination thereof. The polymer resin binder may be selected from among polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and/or a (e.g., any suitable) combination thereof.

If (e.g., when) a water-soluble binder is used as the binder, a cellulose-based compound capable of imparting or increasing viscosity may be further included. As the cellulose-based compound, one or more of carboxymethyl cellulose, hydroxypropyl methylcellulose, methyl cellulose, and alkali metal salts thereof may be mixed and used. The alkali metal may be Na, K, and/or Li.

The binder may be included in an amount of about 40 wt% to about 70 wt%, for example, about 40 wt% to about 65 wt%, about 45 wt% to about 65 wt%, or about 45 wt% to about 60 wt% based on 100 wt% of the total weight of the separator composite layer. If (e.g., when) the binder content (e.g., amount) is within the foregoing ranges, the separator composite layer may exhibit or provide excellent or suitable insulating (e.g., electrically insulating) properties and appropriate or suitable adhesive strength.

### Current Collector

If (e.g., when) the electrode according to one or more embodiments is a positive electrode, aluminum foil may be used as the current collector, but embodiments of the present disclosure are not limited thereto.

If (e.g., when) the electrode according to one or more embodiments is a negative electrode, the current collector may be selected from among a copper foil, a nickel foil, a stainless steel foil, a titanium foil, a nickel foam, a copper foam, a polymer substrate coated with a conductive (e.g., electrically conductive) metal, and/or a (e.g., any suitable) combination thereof, but embodiments of the present disclosure are not limited thereto.

### Method for Manufacturing Electrode

In one or more embodiments, a method for manufacturing the electrode may include (a) preparing an electrode including a current collector, an electrode active material layer on the current collector, and an uncoated region on which the electrode active material layer is not coated on the current collector; (b) in an electrospinning equipment, injecting a polymer composition into a supply device of a nozzle section ejected onto the electrode active material layer, and injecting an inorganic particle composition into another supply device of a nozzle section ejected onto the uncoated region; and (c) concurrently (e.g., simultaneously) performing electrospinning by utilizing an electrospinning device, so that the polymer composition is electrospun on the electrode active material layer to form or provide a fiber region including a polymer fiber, and the inorganic particles are electrosprayed on the uncoated region to form or provide an inorganic coating region, thereby forming or providing a separator composite layer in which the fiber region and the inorganic coating region are continuously (e.g., substantially continuously) formed or provided on the electrode surface.

The separator composite layer may be on the current collector on which the electrode active material layer is formed or provided or the current collector on which the electrode active material layer is not formed or provided, wherein the separator composite layer may be concurrently (e.g., simultaneously) formed or provided with the electrode active material layer. If (e.g., when) the separator composite layer is on the current collector on which the electrode active material layer is formed or provided, the separator composite layer may be on a surface portion of the electrode active material layer and on the uncoated region where the electrode active material layer is not formed or provided, wherein the separator composite layer is overlapped with the electrode active material layer to form or provide a mixed phase.

The method of manufacturing the electrode may further include forming or providing the electrode active material layer at least one surface of the current collector. Herein, a method of forming or providing the electrode active material layer has no particular limitation but may include, for example, coating the electrode active material slurry on the current collector and, if (e.g., when) necessary, drying and/or compressing it. The coating may be performed in one or more suitable methods, such as slot die coating, shutter coating, gravure coating, and/or the like. The electrode active material layer may refer to a state that the electrode active material slurry is coated on at least one surface of the current collector or a state that the coated electrode active material slurry is substantially completely dried or substantially completely dried and compressed.

The fiber region may be formed or provided by utilizing electrospinning. The electrospinning is a method of forming or providing a film by ejecting an electrically charged polymer solution in the form of fibers through a jet. Accordingly, the fiber region formed or provided by utilizing the electrospinning may be configured or arranged to have a 3-dimensional network mesh wherein fibers having a diameter of hundreds of nm to tens of µm are randomly, for example, irregularly stacked. Accordingly, the fiber region may be a film with (or having) a very porous structure.

The inorganic coating region may be formed or provided by electroapraying. The electroapraying is a method of applying a high voltage to a solution to charge it and spraying it to a substrate through a fine spray nozzle or a spray head that generates droplets.

The electroapraying process may spray the inorganic coating region composition as dots onto the current collector to form or provide the inorganic coating region. If (e.g., when) the inorganic coating region is formed or provided not by the electroapraying but by direct coating or dipping the current collector, a thickness of an electrode plate may be excessively (or substantially) increased due to a solvent remaining in the electrode plate, failing in appropriately or suitably improving or enhancing energy density per rechargeable lithium battery volume. In one or more embodiments, as the inorganic coating region is formed or provided by the electroapraying process, the solvent may be well or suitably volatilized, better suppressing or reducing the springback phenomenon that the solvent has damage on the current collector.

### Rechargeable Lithium Battery

In one or more embodiments, a rechargeable lithium battery including the electrode-separator structure as described in one or more embodiments is provided.

In one or more embodiments, a rechargeable lithium battery may include a separator composite layer of a positive electrode-separator structure of the electrode-separator structure, in which the electrode of the electrode-separator structure is a positive electrode, and a separator composite layer of a negative electrode-separator structure of the electrode-separator structure, in which the electrode of the electrode-separator structure is a negative electrode, which are adhered to each other and stacked.

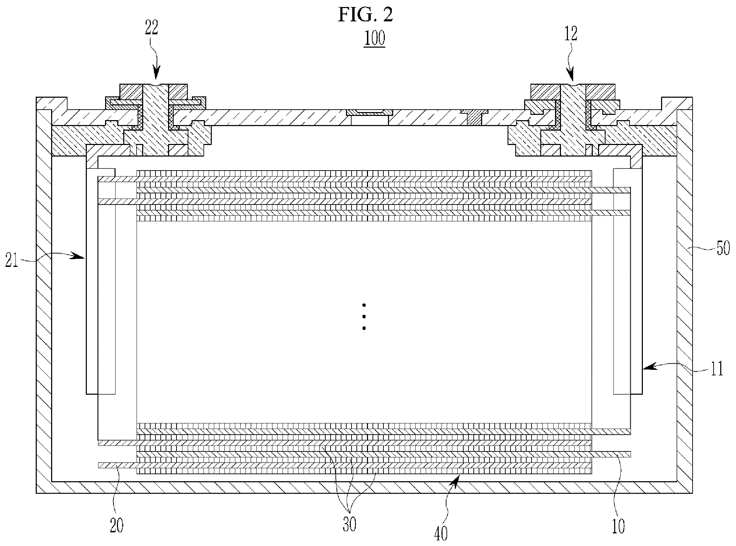

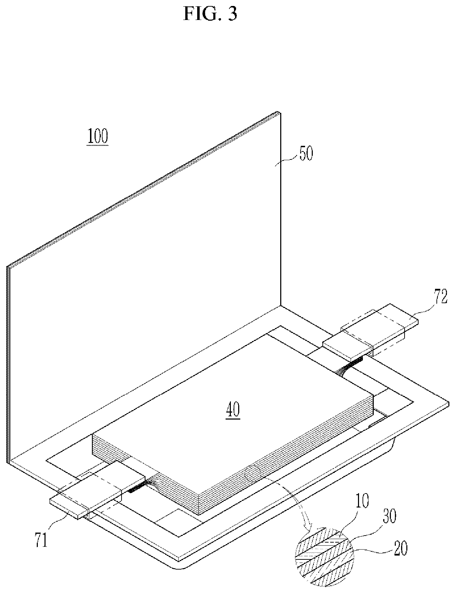

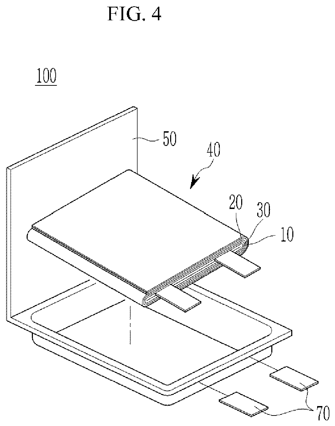

The rechargeable lithium battery may be classified into cylindrical, prismatic, pouch, or coin-type (kind) batteries, and/or the like depending on its shape. FIGS. 1 to 4 are schematic views each illustrating a rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 may include an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated in/with an electrolyte solution. The rechargeable lithium battery 100 may include a sealing member 60 that seals the case 50 as illustrated in FIG. 1. In one or more embodiments, in FIG. 2, the rechargeable lithium battery 100 may include a positive electrode lead tab 11, a positive electrode terminal 12, a negative electrode lead tab 21, and a negative electrode terminal 22. As illustrated in FIGS. 3 and 4, the rechargeable lithium battery 100 may include an electrode tab 70, for example, a positive electrode tab 71 and a negative electrode tab 72 that act or serve as an electrical path to induce the current formed or provided in the electrode assembly 40 to the outside.

### Positive Electrode

The rechargeable lithium battery may have an electrode according to one or more embodiments applied to the positive electrode. In one or more embodiments, the descriptions of the active material and the positive electrode including the active material are provided.

### Negative electrode

The rechargeable lithium battery may have an electrode according to one or more embodiments applied to the negative electrode. In one or more embodiments, the descriptions of the active material and the negative electrode including the active material are provided.

### Electrolyte

An electrolyte may be, for example, an electrolyte solution, which may include a non-aqueous (e.g., water-insoluble) organic solvent and a lithium salt.

The non-aqueous (e.g., water-insoluble) organic solvent may act or serve as a medium to transmit ions taking part in the electrochemical reaction of a rechargeable lithium battery. The non-aqueous (e.g., water-insoluble) organic solvent may be a carbonate-based, ester-based, ether-based, ketone-based, and/or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In one or more embodiments, the ketone-based solvent may include cyclohexanone and/or the like. The alcohol-based solvent may include ethanol, isopropyl alcohol, and/or the like, and the aprotic solvent may include nitriles, such as R-CN (wherein R may be a C2 to C20 linear, branched, or cyclic hydrocarbon group, a double bond, an aromatic ring, or an ether group, and/or the like; amides, such as dimethylformamide; dioxolanes, such as 1,3-dioxolane, 1,4-dioxolane, and/or the like; sulfolanes, and/or the like.

The non-aqueous (e.g., water-insoluble) organic solvent may be used alone or in a mixture of two or more types (kinds), and if (e.g., when) two or more types (kinds) are used in a mixture, a mixing ratio may be appropriately or suitably adjusted according to the desired or suitable rechargeable lithium battery performance, which is generally available to or generally used by those working in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The non-aqueous (e.g., water-insoluble) organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, and/or an ethylene carbonate-based compound to improve enhance rechargeable lithium battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and/or cyanoethylene carbonate.

The lithium salt dissolved in the organic solvent may supply lithium ions in a rechargeable lithium battery, enable a basic operation of a rechargeable lithium battery, and improve or enhance transportation of the lithium ions between the positive electrode and the negative electrode. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y may be integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 *M* to about 2.0 *M.* If (e.g., when) the concentration of lithium salt is within the foregoing range, the electrolyte solution may have appropriate or suitable ion conductivity and viscosity, and thus excellent or suitable performance may be achieved or provided and lithium ions may move effectively or suitably.

### Separator

Depending on the type (kind) of the rechargeable lithium battery, a separator may be between the positive electrode and the negative electrode. The separator may include polyethylene, polypropylene, polyvinylidene fluoride, and/or a multilayer film of two or more layers thereof, and a mixed multilayer film, such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on one surface or both surfaces (e.g., two opposite (opposite facing) surfaces) of the porous substrate.

The porous substrate may be a polymer film of any one polymer selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (Teflon^{™}), or a copolymer or (e.g., any suitable) mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide and a second structural unit including at least one selected from among a structural unit derived from (meth)acrylic acid and/or (meth)acrylate and a structural unit derived from (meth)acrylamidosulfonic acid and/or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a (e.g., any suitable) combination thereof, but embodiments of the present disclosure are not limited thereto. An average particle diameter (D₅₀) of the inorganic particles may be about 1 nm to about 2000 nm, for example, about 100 nm to about 1000 nm or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm or about 1 µm to about 5 µm.

Examples and Comparative Examples of the present disclosure are described in more detail. However, the following examples are only examples of the present disclosure, and embodiments of the present disclosure are not limited to the following examples.

### Example 1

### 1. Manufacturing of Positive Electrode-Separator Structure

### (1) Preparation of Positive Electrode Slurry

LiCoO₂ as a positive electrode active material, CNT as a conductive (e.g., electrically conductive) material, and polyvinylidene fluoride (PVdF) as a binder were mixed in a weight ratio of 98.3:0.7:1, and the mixture was mixed with N-methylpyrrolidone (NMP) to prepare a positive electrode slurry.

### (2) Preparation of Separator Composite Layer Slurry

A polymer composition was prepared by dissolving polyimide in an N-methylpyrrolidone (NMP) solvent.

An inorganic particle composition was prepared by mixing Al₂O₃ with an average particle diameter (D₅₀) of 2.5 µm, polyvinylidene fluoride (PVdF) as a binder, and a styrene-butadiene rubber (SBR) binder in a weight ratio of 70:15:15 in an N-methylpyrrolidone (NMP) solvent.

### (3) Manufacturing of Positive Electrode-Separator Structure

The positive electrode slurry was coated on the middle of 200 mm (based on a width), while leaving 10 mm (based on the width) as an uncoated region on one surface of an aluminum substrate, to form or provide a positive electrode active material layer on the aluminum substrate. And, while electrospinning the polymer composition on a portion of the upper surface of the positive electrode active material layer, the polymer composition was electrosprayed to be concurrently (e.g., simultaneously) coated on a portion of the upper surface of the positive electrode active material layer and a portion of the uncoated region of the aluminum substrate.

The electrospinning process was performed by placing one nozzle pack consisting of 52 tips with an aperture size of 25G and a focusing roller at an interval of 15 cm, adding the polymer composition to the tips, and applying a voltage of 40 kV to 50 kV thereto under conditions of 26 °C and relative humidity of 50%. Herein, the focusing roller was set at a rolling speed of 1 m/min to 3 m/min to have a solid content (e.g., amount) of 150 µL/min in the polymer composition discharged from the tips. In one or more embodiments, the electrospinning process was performed by flowing compressed air at a pressure of 0.1 MPa. After completing the electrospinning, drying with hot air at 90 °C was performed to form or provide a fiber region with a width of 200 mm and a thickness of 3 µm.

The electrospraying process was performed by placing one nozzle pack consisting of 52 tips with an aperture size of 25G and a focusing roller at an interval of 15 cm, adding the inorganic particle composition to the tips, and applying a voltage of 40 kV to 50 kV thereto under conditions of 26 °C and relative humidity of 50%. Herein, the focusing roller was set at a rolling speed of 1 m/min to 3 m/min to have a solid content (e.g., amount) of 100 µL/min in the inorganic particle composition discharged from the tips. In one or more embodiments, the electrospraying process was performed by flowing compressed air at a pressure of 0.1 MPa. After completing the electrospraying, drying with hot air at 90 °C was performed to form or provide an inorganic coating region with a width of 10 mm and a thickness of 3 µm.

A positive electrode active material layer and a separator composite layer concurrently (e.g., simultaneously) formed or provided on the aluminum substrate were compressed all together to manufacture a positive electrode rolled body. Subsequently, the positive electrode rolled body was cut out by 50 mm (based on a width) from the left end or the right end by using a cutting die with a width of 50 mm and a length of 80 mm. The positive electrode punched body was additionally cut out with a size of a width of 15 mm and a length of 20 mm from the uncoated region of the aluminum substrate to a positive electrode substrate tab, finally obtaining a positive electrode.

In summary of Example 1, a positive electrode slurry was prepared by mixing LiCoO₂ as the positive electrode active material, CNT as the conductive material, and PVdF as the binder in a weight ratio of 98.3:0.7:1 with N-methylpyrrolidone (NMP). For the separator composite layer slurry, a polymer composition was made by dissolving polyimide in NMP, and an inorganic particle composition was prepared by mixing Al₂O₃ (average particle diameter of 2.5 µm), PVdF, and SBR binders in a weight ratio of 70:15:15 in NMP. The positive electrode slurry was coated on an aluminum substrate, leaving an uncoated region. The polymer composition was electrospun onto the positive electrode active material layer and the uncoated region using a nozzle pack with 52 tips, applying a voltage of 40-50 kV, and drying with hot air at 90 °C to form a fiber region. The inorganic particle composition was electrosprayed onto the uncoated region, forming an inorganic coating region. The positive electrode active material layer and separator composite layer were compressed to form a positive electrode rolled body, which was then cut to obtain the final positive electrode.

### 2. Manufacturing of Negative Electrode-Separator Structure

### (1) Preparation of Negative Electrode Slurry

A negative electrode slurry was prepared by mixing artificial graphite as a negative electrode active material, carboxymethyl cellulose as a thickener, and a styrene-butadiene rubber as a binder in a weight ratio of 97.8:0.9:1.3 and mixing this mixture with water.

### (2) Manufacturing of Negative Electrode-Separator Structure

The negative electrode slurry was coated on the middle of 200 mm (based on the width) of a copper substrate, while leaving 10 mm (based on a width) as an uncoated region on one surface of the copper substrate, to form or provide a negative electrode active material layer. And, the polymer composition was electrospun on a portion of the upper surface of the negative electrode active material layer in substantially the same manner as in the positive electrode-separator structure, and concurrently (e.g., simultaneously), the polymer composition was electrosprayed to coat the portion of the upper surface of the negative electrode active material layer and a portion of the uncoated region of the copper substrate.

A negative electrode active material layer and a separator composite layer concurrently (e.g., simultaneously) formed or provided on the copper substrate were compressed to manufacture a negative electrode rolled body. The negative electrode rolled body was cut out by 50 mm (based on a width) from the left end or the right end of the negative electrode rolled body by using a cutting die with a width of 50 mm and a length of 80 mm. The negative electrode punched body was additionally cut put with a size of a width of 10 mm and a length of a 15 mm as the uncoated region of the copper substrate to form or provide a negative electrode substrate tab, finally obtaining a negative electrode.

### 3. Manufacturing of Rechargeable Lithium Battery Cell

The positive electrode-separator structure and the negative electrode-separator structure were bonded to manufacture a laminate, and the laminate was wound and then, pressurized in a vertical direction to manufacture a laminated electrode assembly.

The laminated electrode assembly was housed in a pouch, and an electrolyte prepared by mixing ethylene carbonate and diethyl carbonate in a volume ratio of 50:50 and dissolving 1.0 *M* of a LiPF6 lithium salt in the mixed solvent was injected thereinto to manufacture a rechargeable lithium battery cell.

### Example 2

A positive electrode-separator structure and a rechargeable lithium battery cell were manufactured in substantially the same manner as in Example 1 except that the polymer composition was prepared by using polyvinylidene fluoride instead of the polyimide.

### Comparative Example 1

A positive electrode-separator structure and a rechargeable lithium battery cell were manufactured in substantially the same manner as in Example 1 except that the positive electrode-separator structure was manufactured without performing the electrospray process, for example, not forming or providing the inorganic coating region.

### Comparative Example 2

A positive electrode-separator structure and a rechargeable lithium battery cell were manufactured in substantially the same manner as in Example 1 except that the positive electrode-separator structure was manufactured without performing the electrospinning process, for example, not forming or providing the fiber region.

### Comparative Example 3

A positive electrode-separator structure and a rechargeable lithium battery cell were manufactured in substantially the same manner as in Example 1 except that the positive electrode-separator structure was manufactured without performing the electrospinning and the electrospinning process, for example, not forming or providing the separator composite layer.

### Evaluation Example 1: Heat Generation Evaluation

The positive electrode-separator structures of Examples 1 and 2 and Comparative Examples 1 to 3 were evaluated with respect to a difference in heat generation during high-rate charging. After punching out a shape with a thin width in the middle from each positive electrode-separator structure, a voltage applied to where the width decreased from 2 cm to 1 cm, a current, and a degree that each separator was damaged according to the voltage according thereto were compared to check a maximum current where the separator started to damage, and the results are shown in Table 1.

**Table 1**

| | Voltage (V) | Current (mA) | Separator state | maximum current(m A) |
|---|---|---|---|---|
| Example 1 | 0.4 | 20 | No change | 21 |
| Example 2 | 0.4 | 20 | No change | 24 |
| Comparative Example 1 | 0.3 | 20 | shrink | 15 |
| Comparative Example 2 | 0.3 | 20 | discolor | 17 |
| Comparative Example 3 | 0.4 | 20 | shrink | 8 |

Referring to Table 1, Examples 1 and 2, in which a separator composite layer was formed or provided on an electrode active material layer according to the electrospinning and electrospraying process, compared with Comparative Example 1, in which an inorganic coating region was not formed or provided on the electrode active material layer, Comparative Example 2, in which a fiber region was not formed or provided on the electrode active material layer, and Comparative Example 3, in which the separator composite layer was not formed or provided on the electrode active material layer, exhibited a high maximum current at which the a separator started to be damaged. In one or more embodiments, when the same current of 20 mA was applied, the separators with a positive electrode-separator structure according to Examples 1 and 2 exhibited no changes, but the separators with a positive electrode-separator structure according to Comparative Examples 1 to 3 were contracted and/or discolored. Accordingly, the separators of Examples 1 and 2, which had excellent or suitable durability and easily controllable exothermicity, were confirmed to be continuously (e.g., substantially continuously) used without shrinking even at a high current by reducing heat transfer.

### Evaluation Example 2: Evaluation of Initial Charge/Discharge Capacity and Efficiency

The rechargeable lithium battery cells according to Examples 1 and 2 and Comparative Examples 1 to 3 were charged to an upper limit voltage of 4.53 V at a constant current of 0.2 C and to 0.05 C at the constant voltage and then, discharged to a cut-off voltage of 3.0 V at 0.2 C at 25 °C for initial charge and discharge. Table 2 shows initial charge capacity, initial discharge capacity, and a ratio of the latter to the former as efficiency.

**Table 2**

| | 0.2C charge capacity (mAh/g) | 0.2 C discharge capacity (mAh/g) | Efficiency (%) |
|---|---|---|---|
| Example 1 | 244.1 | 199.2 | 81.6 |
| Example 2 | 247.7 | 202.5 | 81.8 |
| Comparative Example 1 | 247.1 | 201.4 | 81.5 |
| Comparative Example 2 | 245.2 | 200.5 | 81.7 |
| Comparative Example 3 | 244.9 | 200.1 | 81.7 |

Referring to Table 2, even when a separator composite layer was formed or provided on an electrode active material layer according to the electrospinning and electrospraying process, the charge/discharge capacity or the efficiency was not deteriorated. Accordingly, in the rechargeable lithium battery cells including the electrode-separator structure that the separator composite layer was formed or provided on the electrode active material layer according to the electrospinning and electrospraying process, charge/discharge capacity or efficiency were not deteriorated, and concurrently (e.g., simultaneously), excellent or suitable durability was not only secured, but also exothermicity was easily controlled.

A battery manufacturing device, a battery management system (BMS) device, and/or any other relevant devices or components according to one or more embodiments of the present disclosure may be implemented by utilizing any suitable hardware, firmware (e.g. an application-specific integrated circuit), software, and/or a (e.g., any suitable) combination of software, firmware, and hardware. For example, one or more suitable components of the device may be provided on one integrated circuit (IC) chip or on separate IC chips. Further, one or more suitable components of the device may be implemented on a flexible printed circuit film, a tape carrier package (TCP), a printed circuit board (PCB), and/or provided on one substrate. Further, the one or more suitable components of the device may be a process or thread, running on one or more processors, in one or more computing devices, executing computer program instructions and interacting with other system components to perform the one or more suitable functionalities described herein. The computer program instructions may be stored in a memory which may be implemented in a computing device using a standard memory device, such as, for example, a random access memory (RAM). The computer program instructions may also be stored in other non-transitory computer readable media, such as, for example, a CD-ROM, a flash drive, and/or the like. Also, a person of skill in the art should recognize that the functionality of one or more suitable computing devices may be combined or integrated into a single computing device, or the functionality of a particular computing device may be distributed across one or more other computing devices without departing from the scope of the present disclosure.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied. While the subject matter of the present disclosure has been described in connection with what is presently considered to be practical embodiments, it is to be understood that the present disclosure is not limited to the disclosed embodiments. In contrast, it is intended to cover one or more suitable modifications and equivalent arrangements included within the spirit and scope of the appended claims and equivalents thereof. It therefore will be understood that one or more embodiments described above are just illustrative but not limitative in all aspects.

### Reference Numerals

| | | | |
|---|---|---|---|
| 100 | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An electrode-separator structure, comprising:
an electrode comprising:
a current collector;
an electrode active material layer on the current collector; and
an uncoated region at at least one end of the current collector where the electrode active material layer is not coated on the current collector, and
a separator composite layer on a surface of the electrode,
wherein the separator composite layer comprises a fiber region comprising a polymer fiber and provided on the electrode active material layer; and an inorganic coating region comprising inorganic particles and provided on the uncoated region.

2. The electrode-separator structure as claimed in claim 1, wherein
the uncoated region is at one end or both ends of the current collector.

3. The electrode-separator structure as claimed in claim 1 or 2, wherein the polymer fiber comprises polyethylene, polypropylene, polymethyl methacrylate, polyvinylidene fluoride, polyvinyl pyrrolidone, polysulfone, polystyrene, polyvinyl chloride, polyethylene terephthalate, polyimide, polyetherimide, polyvinyl alcohol, polyacrylonitrile, polytetrafluoroethylene, polyamideimide, polyetheretherketone, polyethersulfone, carboxymethyl cellulose, polyphenylene sulfide, or a combination thereof.

4. The electrode-separator structure as claimed in any one of claims 1 to 3, wherein
the electrode is a positive electrode, and
the polymer fiber comprises polyimide, polypropylene, polyetherimide, polyacrylonitrile, polyvinylidene fluoride, polyvinylpyrrolidone, or a combination thereof.

5. The electrode-separator structure as claimed in any one of claims 1 to 3, wherein
the electrode is a negative electrode, and
the polymer fiber comprises polyimide, polypropylene, polyetherimide, polyacrylonitrile, polyvinyl alcohol, carboxymethyl cellulose, or a combination thereof.

6. The electrode-separator structure as claimed in any one of claims 1 to 5, wherein
a diameter of the polymer fiber is about 20 nm to about 10 µm, and
a length of the polymer fiber is about 0.5 µm to about 50 cm.

7. The electrode-separator structure as claimed in any one of claims 1 to 6, wherein
a width of the inorganic coated region is about 20 mm to about 100 mm.

8. The electrode-separator structure as claimed in any one of claims 1 to 7, wherein
the inorganic coating region is provided on the uncoated region and a portion of the electrode active material layer.

9. The electrode-separator structure as claimed in any one of claims 1 to 8, wherein
the inorganic particles comprise aluminum oxide, silicon dioxide, magnesium oxide, titanium dioxide, hafnium oxide, tin oxide, cerium oxide, nickel oxide, zinc oxide, calcium oxide, zirconium oxide, yttrium oxide, silicon carbide, hexagonal boron nitride, boron nitride nanotubes, an aerogel, or a combination thereof.

10. The electrode-separator structure as claimed in any one of claims 1 to 9, wherein
the fiber region and the inorganic coating region are continuously present on substantially the same plane.

11. The electrode-separator structure as claimed in any one of claims 1 to 10, wherein
a difference between
a distance from the current collector to a surface of the fiber region; and
a distance from the current collector to a surface of the inorganic coating region is less than or equal to about 1 µm.

12. The electrode-separator structure as claimed in any one of claims 1 to 11, wherein
a thickness of the fiber region is about 1 µm to about 30 µm.

13. The electrode-separator structure as claimed in any one of claims 1 to 12, wherein
a thickness of the inorganic coating region is about 1 µm to about 30 µm.

14. A method comprising
(a) preparing an electrode comprising a current collector, an electrode active material layer on the current collector, and an uncoated region on which the electrode active material layer is not coated on the current collector;
(b) in an electrospinning equipment, injecting a polymer composition into a supply device of a nozzle section ejected onto the electrode active material layer, and injecting an inorganic particle composition into another supply device of a nozzle section ejected onto the uncoated region; and
(c) concurrently performing electrospinning by utilizing an electrospinning device, so that the polymer composition is electrospun on the electrode active material layer to provide a fiber region comprising a polymer fiber, and inorganic particles are electrosprayed on the uncoated region to provide an inorganic coating region, thereby providing a separator composite layer in which the fiber region and the inorganic coating region are continuously provided on the electrode surface,
wherein the method is a method for manufacturing an electrode-separator structure.

15. A rechargeable lithium battery, comprising the electrode-separator structure as claimed in any one of claims 1 to 13.

16. The rechargeable lithium battery as claimed in claim 15, wherein
the separator composite layer of a positive electrode-separator structure of the electrode-separator structure and the separator composite layer of a negative electrode-separator structure of the electrode-separator structure are stacked and adhered to each other.
